# EUROPEAN PATENT SPECIFICATION

(11) **EP 1 092 826 B1**
(45) Date of publication and mention of the grant of the patent: **27.08.2003**
(21) Application number: 00122464.1
(22) Date of filing: 13.10.2000
(51) Int. Cl.: E05B 71/00, B60K 1/04

(54) **Battery mounting and removing apparatus for power-assisted bicycle and wheel-lock apparatus**
Vorrichtung zum Einbau und Ausbau von Batterien in Fahrrädern mit Hilfsantrieb und Radsperrvorrichtung
Dispositif pour le montage et le démontage de batterie de bicyclette à commande assistée et dispositif de verrouillage d'une roue

(30) Priority: 13.10.1999 JP 29165399; 14.12.1999 JP 35485999
(43) Date of publication of application: 18.04.2001
(73) Proprietor: HONDA GIKEN KOGYO KABUSHIKI KAISHA, Minato-ku Tokyo (JP)
(72) Inventor: Shimmura, Hiroyuki, 4-1 Chuo 1-chome, Wako-shi, Saitama (JP); Nagura, Hidenori, 4-1 Chuo 1-chome, Wako-shi, Saitama (JP); Iseno, Mitsuru, 4-1 Chuo 1-chome, Wako-shi, Saitama (JP)
(74) Representative: Liska, Horst, Dr.-Ing.

(56) References cited:
- EP-A- 0 550 795
- EP-A- 0 715 982
- EP-A- 0 822 134
- PATENT ABSTRACTS OF JAPAN vol. 1996, no. 11, 29 November 1996 (1996-11-29) & JP 08 183490 A (YAMAHA MOTOR CO LTD), 16 July 1996 (1996-07-16)

## Description

This invention relates to a battery mounting and removing apparatus for a power-assisted bicycle, and more particularly to a battery mounting and removing apparatus for a power-assisted bicycle wherein a battery can be removed from the power-assisted bicycle without using a key and the battery can be locked effectively in practical use. The present invention also relates to a wheel lock apparatus for a motor-assisted bicycle capable of locking/unlocking a battery in combination of the operation of the battery mounting and removing apparatus and the wheel locking/unlocking operation of the wheel lock apparatus.

Conventionally, in a power-assisted bicycle wherein a driving system by treadling force and another driving system by an electric motor are provided parallelly, a wheel lock apparatus for locking movement of the vehicle and a battery lock apparatus for locking a battery are provided separately. The power-assisted bicycle of the type described, however, requires a space in which both of the wheel lock apparatus and the battery lock apparatus are installed. Consequently, the bicycle with which an only limited space is available has a low degree of freedom in designing, and the operability is complicated in that two separate operations of wheel locking and battery locking are required.

Thus, a lock apparatus has been proposed wherein a wheel lock apparatus and a battery lock apparatus are provided integrally within a composite case and the wheel lock apparatus and the battery lock apparatus can be operated with a single cylinder lock as disclosed, for example, in the official gazette of Japanese Patent Laid-Open No. Hei 11-36681. In the lock apparatus, if the key is inserted into the cylinder lock and is turned in one direction while it is kept pushed in, then the battery lock apparatus is brought out of a locking state. Then, if the battery is pulled out, then a lock bar returns automatically to establish a locking state. However, if the key is turned in the other direction, then the wheel lock apparatus is automatically brought out of a locking state by an action of a spring. On the other hand, when locking is to be performed, if the removed battery is moved down along a seat post, then an engaging piece extending rearwardly from an upper portion of the battery is engaged with the lock bar to automatically establish a locking state, and if a knob is pulled down manually, the wheel can be locked.

However, with the lock apparatus described above, however, in order to bring the battery lock apparatus out of a locking state, it is necessary to insert the key into the cylinder lock and turn the key in one direction while it is kept pushed in, but in order to bring the wheel lock apparatus out of a locking state, the key must be turned in the other direction. Thus, the different key operations are required for locking of the battery lock apparatus and locking of the wheel lock apparatus, and the key operations are complicated. Further, in order to remove the battery from the vehicle body, the key is required. Consequently, the operation for removing the battery is cumbersome.

It is a first object of the present invention to eliminate the problems of the prior art described above and provide a battery mounting and removing apparatus for a power-assisted bicycle wherein a battery can be removed from a vehicle body without using a key and besides the battery can be locked effectively in practical use.

In order to achieve the first object described above, according to the present invention, a battery mounting and removing apparatus for a power-assisted bicycle on which a battery is carried has a first characteristic in that it comprises battery mounting and removing means for securing and releasing the battery to and from a vehicle body, and wheel locking means for locking a wheel, and that the battery mounting and removing means is disabled from being operated when the wheel is locked. According to the characteristic, when the wheel is not locked, the battery can be removed from the vehicle body without a key, but when the wheel is locked, that is, generally when a user tries to leave the vehicle body, the battery cannot be removed from the vehicle body. Consequently, both of easy mounting or removal of the battery and effective locking can be achieved at the same time.

According to the present invention, a battery mounting and removing apparatus for a power-assisted bicycle has a second characteristic in that the battery mounting and removing means is formed from an engaging hook for engaging with the battery, and an operation lever for releasing the engaging hook from the battery. According to the characteristic, the user can release the battery from the engaging hook by the simple operation only of pushing the operation lever, and since the battery, the engaging portion of the engaging hook and the operation portion can be disposed arbitrarily, the degree of freedom in designing is very high.

According to the present invention, a battery mounting and removing apparatus for a power-assisted bicycle has a third characteristic in that the wheel locking means is capable of locking the wheel using a key and disables the operation lever from being operated in a state wherein the wheel is locked. According to the characteristic, the operation lever can be put into a disable state in response to locking of the wheel using the key, and a key operation for exclusive use for locking the battery is unnecessary.

According to the present invention, a battery mounting and removing apparatus for a power-assisted bicycle has a fourth characteristic in that the battery is carried along a seat post such that a longitudinal direction thereof is a vertical direction, and discharge contacts of the battery are disposed at a lower portion of the battery while also the engaging hook is provided at a lower portion of the battery in the proximity of the discharge contacts, and the operation lever includes an operation portion at an upper portion of the battery and an operation performed for the operation lever is transmitted to the engaging hook. According to the characteristic, since the engaging hook is provided at a position proximate to the contacts at a lower portion of the battery, contact jumping by vibrations of the vehicle body during running can be suppressed effectively. Consequently, the connection between the battery and the contact unit can always be stabilized. Further, since the operation portion of the operation lever for releasing the engaging hook is provided at an upper portion of the battery, the user can operate the operation lever in an ordinary standing posture without stooping. Consequently, the user can perform removal and mounting of the battery in an easy posture.

According to the present invention, a battery mounting and removing apparatus for a power-assisted bicycle has a fifth characteristic in that the operation lever includes means for holding a released state of the engaging hook when the operation lever is operated in a direction in which the engagement between the engaging hook and the battery is cancelled, and means for cancelling the held state by a removing operation of the battery from the vehicle body. According to the characteristic, if the operation lever is operated, then the battery releasing state is maintained. Consequently, even when the user wants to remove the battery only with one hand such as when a luggage is carried with the other hand, the user can remove the battery. Further, since the operation lever returns as a result of the removing operation of the battery, also mounting of the battery can be performed readily.

To achieve the above first object, according to the present invention, a wheel lock apparatus for a power-assisted bicycle, which is disposed near a battery mounted on a vehicle, has a sixth characteristic in that the wheel lock apparatus is capable of locking the battery at a wheel lock position and unlocking the battery at a wheel unlock position. According to the characteristic, since there are two key lock and unlock positions although the wheel lock key serves as a battery lock key, the key operation can be easily performed even by a rider not being good at mechanical operation or being far advanced in age.

According to the present invention, a wheel lock apparatus for a power-assisted bicycle has a seventh characteristic in that the wheel lock apparatus includes: a key cylinder; a lock bar which projects from a housing of the wheel lock apparatus by turning of the key cylinder to a lock position, to lock a wheel; and a lock plate which projects from the housing in the direction of the battery by turning of the key cylinder to the lock position, to prohibit the unlocking of the battery. According to the characteristic, since the lock plate projects along with the projection of the lock bar, that is, both the lock plate and the lock bar simultaneously project, it is possible to simplify the mechanism of the wheel lock apparatus.

According to the present invention, a wheel lock apparatus for a power-assisted bicycle has an eighth characteristic in that the wheel lock apparatus includes: plate means turnable integrally with the key cylinder; and a lock plate connected to the plate means; wherein the lock plate is moved in/from the lock plate when the key cylinder is turned to a lock/unlock position. According to the characteristic, since the battery lock mechanism can be obtained only by adding the lock plate, which is interlocked with the plate means, to the wheel lock apparatus, it is possible to simplify and miniaturize the configuration of the lock mechanism.

According to the present invention, a wheel lock apparatus for a power-assisted bicycle has a ninth characteristic in that the plate means includes: a cam plate turnable integrally with the key cylinder; a first link plate turnable in interlocking with the rotation of the cam plate; and a second link plate, with one end thereof linked with the first link plate and the other end thereof connected to a wire cable for driving the lock bar. According to the characteristic, it is possible to realize the wheel lock apparatus with a simple configuration.

According to the present invention, a wheel lock apparatus for a power-assisted bicycle has a tenth characteristic in that the cam plate is provided with means connected to the lock plate. According to the characteristic, it is possible to realize a small-sized simple battery lock mechanism only by adding a simple structure to the wheel lock apparatus.

To achieve the above second object, according to the present invention, a wheel lock apparatus for a power-assisted bicycle, having the seventh characteristic, also has an eleventh characteristic in that the wheel lock apparatus comprises: means for connecting the key cylinder to the lock bar, the means being configured to transmit the rotation of the key cylinder in one direction by the key operation to the lock bar, thereby retracting the lock bar. According to the characteristic, it is possible to lock or unlock the wheel by making the lock bar certainly project or retract along with the turning of the key cylinder by the key operation.

According to the present invention, a wheel lock apparatus for a bicycle has a second characteristic in that it comprises spring means for biasing the lock bar in its retraction direction. According to the twelfth characteristic, in an unlocking operation, the biasing force of the spring means is added to the key operating force. Accordingly, the key operation can be performed with small force, and besides the lock bar is retracted to unlock the wheel with certainty.

According to the present invention, a wheel lock apparatus for a bicycle has a thirteenth characteristic in that the connection means transmits turning motion in the other direction of the key cylinder to project the lock bar. According to the third characteristic, both of locking and unlocking operations can be performed by pivotal motion of the single lock bar by turning motion of the key cylinder.

Further, according to the present invention, a wheel lock apparatus for a power-assisted bicycle has a fourteenth characteristic in that it comprises a lock plate for inhibiting mounting and removal of a battery, which serves as a driving source of the electric motor, onto and from the bicycle, and interlocking means for causing the lock plate to project in response to projection of the lock bar to inhibit mounting and removal of the battery and causing the lock plate to be retracted in response to retraction of the lock bar to cancel the inhibition of mounting and removal of the battery.

According to the fourteenth characteristic, the lock bar and the lock plate are projected and retracted in an interlocking relationship with each other in accordance with a key operation without being influenced by increasing frictional force when locking and unlocking of a battery and locking and unlocking of a wheel are realized with a single lock apparatus. In other words, the lock bar and the lock plate operate to perform locking and unlocking of the battery and the wheel with certainty.

According to the invention, the following effects are exhibited.

According to the invention as set forth in claim 1, when the wheel is not locked, the battery can be removed from the vehicle body without a key, but if the user locks the wheel when the user leaves the vehicle body, then the battery cannot be removed from the vehicle body. Consequently, removal and mounting of the battery are facilitated and locking of the battery can be performed effectively. In other words, both of easy removal of the battery and effective locking in actual use can be achieved.

According to the invention as set forth in claim 2, the user can release the battery from the engaging hook by the simple operation only of pushing the operation lever. Further, the operation lever can be disposed arbitrarily at a position at which it can be manually operated readily. According to the invention as set forth in claim 3, the operation lever can be put into a disabled state in response to locking of the wheel using the key, and a key operation for exclusive use for locking the battery is unnecessary.

According to the invention as set forth in claim 4, since the engaging hook is provided at a position proximate to the contacts at a lower portion of the battery, contact jumping by vibrations of the vehicle body during running can be suppressed effectively, and the connection between the battery and the contact unit can always be stabilized. Further, the life of the contact unit can be enhanced. Furthermore, since the operation portion of the operation lever for releasing the engaging hook is provided at an upper portion of the battery, the user can operate the operation lever in an ordinary standing posture without stooping. Consequently, the user can perform removal and mounting of the battery in an easy posture.

According to the present invention as set forth in claim 5, if the operation lever is operated, then the battery releasing state is maintained. Consequently, even when the user wants to remove the battery only with one hand such as when a luggage is carried with the other hand, the user can remove the battery. Further, since the operation lever returns as a result of the removing operation of the battery, also mounting of the battery can be performed readily.

According to the inventions described in claims 6 to 10, it is possible to lock the wheel and lock/unlock the battery with a simple operation even by a rider not being good at mechanical operation. In addition to the above effect, the inventions described in claims 6 to 10 exhibit the following effects:

According to the invention described in claim 6, since the wheel lock apparatus is capable of locking the battery at a wheel lock position and unlocking the battery at a wheel unlock position, there are two key lock and unlock positions although the wheel lock key serves as a battery lock key, with a result that the key operation can be easily performed even by a rider not being good at mechanical operation or being far advanced in age. Further, since a rider stands beside the vehicle when the wheel is not locked, the battery can be easily removed from the vehicle. On the contrary, if the wheel is locked when the rider is separated from the vehicle, the battery is simultaneously locked and thereby it cannot be removed.

According to the invention described in claim 7, when the key cylinder is turned into the lock position, the lock bar for locking the wheel projects from the housing of the wheel lock apparatus and simultaneously the lock plate prohibiting the unlocking of the battery projects from the housing in the battery direction, and accordingly, it is possible to simplify the mechanism of the wheel lock apparatus.

According to the inventions described in claims 8 and 10, since the battery lock mechanism can be obtained only by adding the lock plate, which is interlocked with the plate means turned integrally with the key cylinder, to the wheel lock apparatus, it is possible to simplify and miniaturize the configuration of the lock mechanism.

According to the invention described in claim 9, it is possible to realize the wheel lock apparatus with a simple configuration.

As apparent from the foregoing description, according to the present invention as set forth in claims 11 to 14, locking and unlocking of the wheel and the battery can be performed without being influenced by a dispersion in frictional force caused by accuracy in manufacture or a drop of the biasing force of the spring means. First, according to the invention as set forth in claim 11, the lock bar can be projected or retracted with certainty in an interlocking relationship with a key operation. According to the invention as set forth in claim 12, since the force of the spring means is added to the operating force of the key operation, the lock bar can be retracted with a higher degree of certainty. According to the invention as set forth in claim 13, since projection and retraction of the lock bar can be performed by turning motion of the single key cylinder, the operation is simplified.

According to the invention as set forth in claim 14, in the structure wherein the lock plate for inhibiting removal and mounting of the battery is operated in an interlocking relationship with an operation of the lock bar, although the frictional force increases, both of the lock plate and the lock bar can be operated with certainty by a key operation.

In the following, the present invention is described in detail with reference to the drawings.

Figs. 1 to 18 illustrate a preferred embodiment of the present invention, in which:
FIG. 1 is a view of a general construction of a power-assisted bicycle to which the present invention is applied.
FIG. 2 is a schematic perspective view of a battery and an accommodating case.
FIG. 3 is an enlarged view of a construction of essential part of FIG. 1.
FIG. 4 is a top plan view of a rear portion of the battery in a mounted state of the battery.
FIG. 5 is a top plan view of the rear portion of the battery when an operation lever is pushed.
FIG. 6 is a schematic perspective view of a contact unit.
FIG. 7 is a top plan view of the rear portion of the battery in a mounted state of the battery in another embodiment of the present invention.
FIG. 8 is a top plan view when the operation lever of FIG. 7 is pushed.
FIG. 9 is a top plan view of the rear portion of the battery as viewed from above.
FIG. 10 is a top plan view of a wheel lock apparatus of an embodiment of the present invention.
FIG. 11 is a sectional view taken along line A-A of FIG. 10.
FIG. 12 is a perspective view showing a relationship of the battery and wheel lock apparatus and a vehicle body.
FIG. 13 is an enlarged view of essential part of FIG. 3.
FIG. 14 is a view of a structure of an example of a pivoting apparatus for a bicycle seat.
FIG. 15 is a sectional view taken along line X-X of FIG. 14.
FIG. 16 is an enlarge view (part 1) of essential part illustrating engagement of a cam plate and an arm plate with a stopper.
FIG. 17 is an enlarge view (part 2) of essential part illustrating engagement of the cam plate and the arm plate with the stopper.
FIG. 18 is an enlarge view (part 3) of essential part illustrating engagement of the cam plate and the arm plate with the stopper.

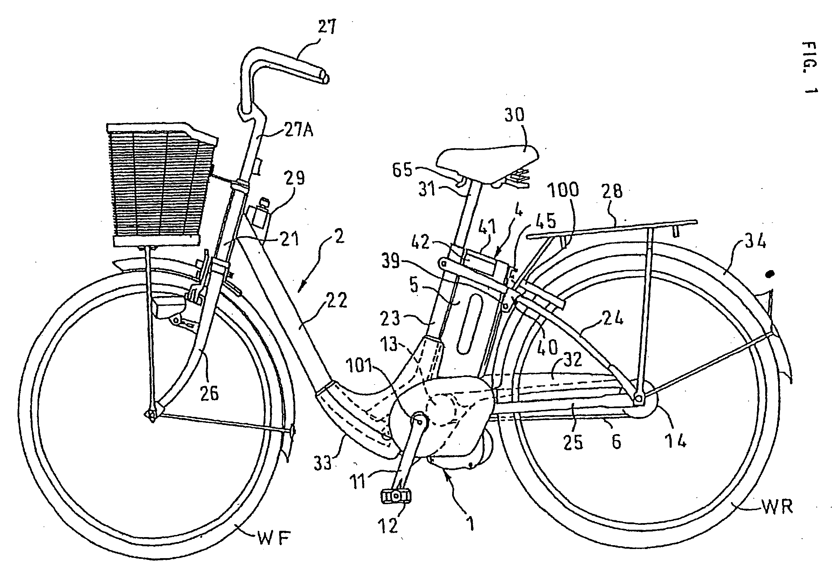

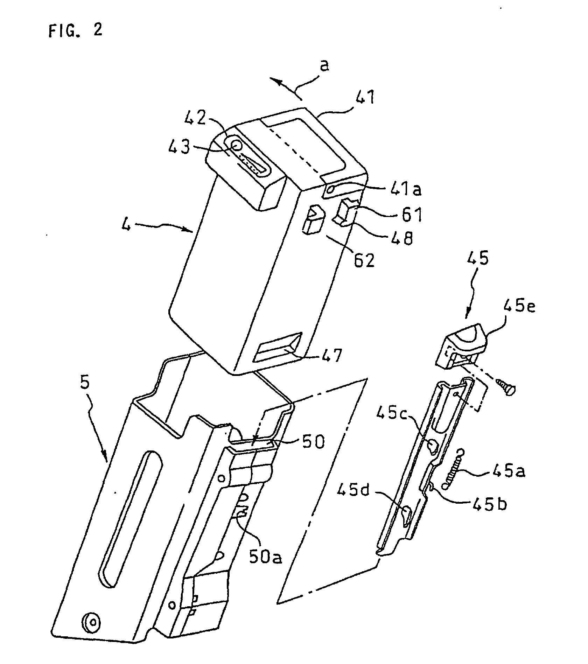

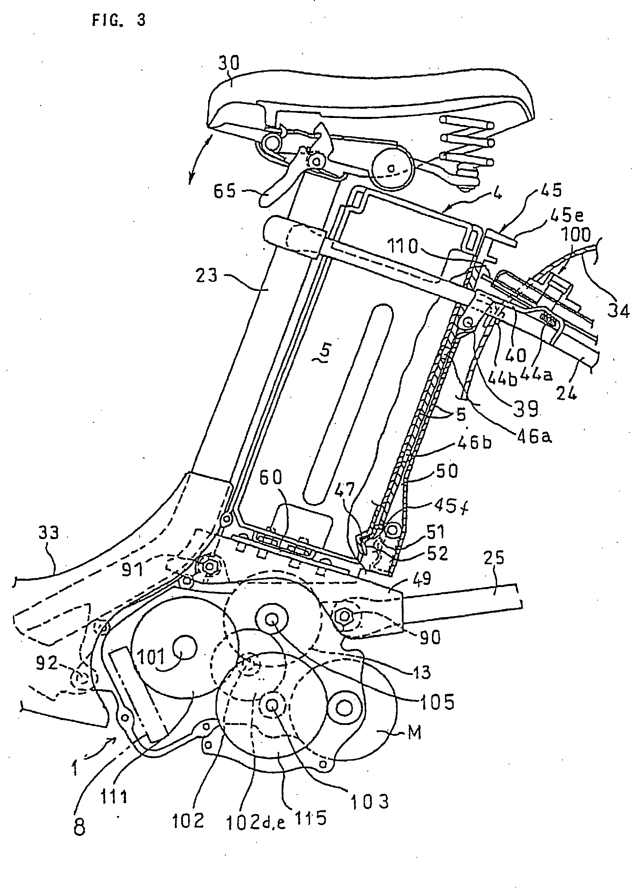

FIG. 1 is a side elevational view of a power-assisted bicycle to which an electric auxiliary unit of the present invention is applied, FIG. 2 is a schematic perspective view of a battery and an accommodating case for the battery carried on the power-assisted bicycle, and FIG. 3 is an enlarged view of essential part of FIG. 1.

As shown in FIG. 1, a body frame 2 of a power-assisted bicycle includes a head pipe 21 positioned at a front portion of the vehicle body, a down pipe 22 extending rearwardly downwardly from the head pipe 21 and extending in a downwardly convex configuration, and a seat post 23 extending upwardly from a portion near a terminal portion of the down pipe 22. A coupling portion between the down pipe 22 and the seat post 23 and peripheral portions to the coupling portion are covered with a resin cover 33 which is divided into upper and lower portions and.is removable. A steering handle bar 27 is fitted for pivotal motion at an upper portion of the head pipe 21 through a pipe 27A, and a front fork 26 which is steered by the steering handle bar 27 is supported for steering motion at a lower end of the head pipe 21. A front wheel WF is supported for rotation at a terminal end of the front fork 26.

As shown in FIG. 3, an electrical auxiliary unit 1 including an electric motor for assisting the treadling force is suspended at a lower portion of the body frame 2 by tightening screws at three locations of a rear end 92 of the down pipe 22, a front portion 91 of a battery bracket 49 welded to the seat post 23 and a rear portion 90 of the battery bracket 49 together with a chain stay 25. The power supply switch 29 of the electrical auxiliary unit 1 is provided in the proximity of the head pipe 21 on the down pipe 22 such that it may be switched on/off by a power supply key. It is to be noted that the power supply switch 29 may be provided on the steering handle bar 27 forwardly of the handle post 27A.

In the vehicle body, since the coupling portion between the down pipe 22 and the seat post 23 is laid out at a front portion of the electrical auxiliary unit 1, the electrical auxiliary unit 1 can be disposed at a low position and the center of gravity can be provided at a low position. Further, since the height of the frame can be- suppressed low, the "easiness in stepping over" is enhanced.

A crankshaft 101 is supported for rotation on the electrical auxiliary unit 1, and a pair of pedals 12 are supported for rotation at the opposite left and right ends of the crankshaft 101 through a crank 11. A rear wheel WR serving as a driving wheel is supported for rotation between terminal ends of a pair of left and right chain stays 25 which extend rearwardly from the electrical auxiliary unit 1. A pair of left and right seat stays 24 are provided between an upper portion of the seat post 23 and the terminal ends of both chain stays 25. A seat pipe 31 having a seat 30 at an upper end thereof is mounted for sliding movement in the seat post 23 so as to allow adjustment of the vertical position of the seat 30.

A battery accommodating case (hereinafter referred to as accommodating case) 5 for accommodating a battery 4 therein is mounted at a rear portion of the seat post 23 below the seat 30. The battery 4 includes a plurality of battery cells accommodated in a battery case of a substantially parallelepiped and is disposed along the seat post 23 such that the longitudinal direction thereof may be a substantially vertical direction.

A grip 41 attached to the battery 4 as shown in FIG. 2 is provided at a location displaced to the right side of the vehicle body at an end portion (upper end in FIG. 1) of the battery 4 in the longitudinal direction. The grip 41 is mounted for pivotal motion around a pivot shaft 41a and normally pressed against a corner of the battery 4. Generally since a driver stands on the left side of the vehicle body, the grip 41 is disposed on the right side of the vehicle body while the pivot shaft 41a of the grip 41 is disposed on the left side of the vehicle body so that the grip 41 can be erected readily in a direction of an arrow mark a.

A charge remaining power meter 42 is provided at a side portion of an upper face of the battery 4 on which the grip 41 is provided, and if a pushbutton 43 is depressed, then a charged remaining power is displayed on the charge remaining power meter 42. The remaining power meter 42 is mounted on a leftwardly inclined face so that it can be confirmed from upwardly on the left side of the seat 30. Consequently, the driver can confirm the battery remaining power from above while remaining in a standing state.

An operation lever 45 and a wheel lock apparatus 100 for locking and unlocking the battery 4 are provided rearwardly of the battery 4. The operation lever 45 is inserted in a side chamber 50 (refer to FIG. 2) provided on the rear side of the battery accommodating case and elongated in the vertical direction with a substantially rectangular cross section. An engaging hook 52 biased toward the battery 4 by a torsion spring 51 is provided at a lower portion of the side chamber 50 as shown in FIG. 3. The engaging hook 52 engages, when a battery is loaded, with a recessed portion 47 provided at a lower portion of the battery 4 and having an "L" shaped section to fix the battery to the accommodating case 5. It is to be noted that reference character 45a of FIG. 2 denotes a spring which extends between a hook-shaped projection 45b of the operation lever 45 and a cut and erected piece 50a projecting to the inner side of the side chamber 50 as becomes clear from the description hereinafter given. This spring 45a will be further described later.

An upper portion of the battery accommodating case 5 is secured by a screw 39 to a bracket 40 secured to the seat stays 24 by welding or the like, and also the wheel lock apparatus 100 and a rear fender 34 are secured to the bracket 40 by screws 44a and 44b, respectively.

The crankshaft 101, a speed up gear 82, a motor M, a gear 83, an idle shaft 84, a driving sprocket wheel 13 provided with a gear 13A and so forth are disposed in the electrical auxiliary unit 1. The motor M is fed from the battery 4 and generates auxiliary power corresponding to a treadling force detected by a treadling power detector not shown. The auxiliary power is combined with driving torque by human power exerted on the crankshaft 101 and is transmitted to a wheel sprocket wheel 14 of the rear wheel WR through the driving sprocket wheel 13 and a chain 6. The entire driving sprocket wheel 13 and an upper half of the chain 6 are covered with a chain cover 32.

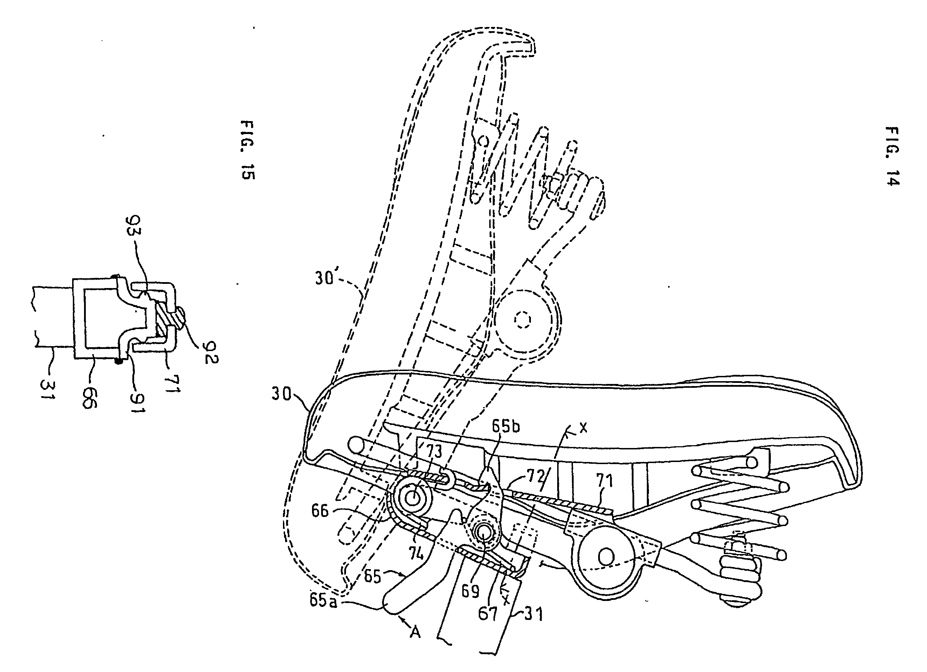

FIG. 14 is a view of a structure of a pivoting apparatus for the bicycle seat, and FIG. 15 is a sectional view taken along line X-X of FIG. 14.

As shown in FIGS. 14 and 15, a first bracket 66 is securely mounted at an upper end of the seat pipe 31 by welding. A cross section of the first bracket 66 in the leftward and rightward directions has a channel-shape, and a shaft 69 extends for rotation on the opposite left and right walls of the first bracket 66. A lever 65 is securely mounted at the center of the shaft 69 in its lengthwise direction, and a torsion spring 67 is fitted around the shaft 69 and is anchored at one end thereof at the lever 65 and at the other end thereof at the first bracket 66. The lever 65 is biased in the counterclockwise direction by the torsion spring 67. An operation portion 65a of the lever 65 extends forwardly downwards to a lower portion of the front side of the seat 30 and can be visually observed readily when viewed from sidewardly by the user in a standing posture. The user can thus find out the operation portion 65a simply even if the user does not look up into the insider of the seat 30 from below while stooping as with the conventional apparatus.

Meanwhile, a second bracket 71 is secured to the back side of the seat 30 at a position opposing to the first bracket 66, and an arresting hole 72 for allowing a latching portion 65b provided at an end portion of the lever 65 to pass therethrough is formed at a predetermined position of a central portion of the second bracket 71. Also the second bracket 71 has a channel-shaped cross section in the leftward and rightward directions, and the opposite left and right walls at an end portion of the second bracket 71 are placed alongside the opposite left and right walls at an end portion of the first bracket 66 such that ones of them are positioned inside and the others of them are positioned outside. A pivot shaft 73 extends in the leftward and rightward directions between the overlapping portions of them, and a torsion spring 74 is fitted around a central portion of the pivot shaft 73. As a result, the second bracket 71 and the seat 30 are biased in the counterclockwise direction by the torsion spring 74.

As shown in FIG. 15, an upper projection 91 for suppressing a play of the seat 30 in the leftward and rightward directions is provided by welding on the first bracket 66, and rubber 92 as a cushioning material is filled between the upper projection 91 and the second bracket 71. The upper projection 91 extends into the inside of the second bracket 71 and prevents the seat 30 from suffering from a play in the leftward and rightward directions.

If the user pushes the operation portion 65a of the lever 65 in the direction of an arrow mark A, that is, obliquely leftwardly upwards in order to perform exchanging of the battery 4 or the like, then the latching portion 65b of the lever 65 is disengaged from the arresting hole 72 of the second bracket 71, and the seat 30 is resiliently pivoted in the counterclockwise direction by the spring force of the torsion spring 74. Then, the seat 30 is pivoted to a position 30' indicated by broken lines. The pivoted position is a position in which the battery 4 and the seat 30 do not interfere with each other when the battery 4 is pulled up in the upward direction. Upon such pivotal motion, since the lever 65 and the mounting member for the lever 65 on the bracket remain on the first bracket 66 side, the weight of the seat on the second bracket 71 side which is pivoted can be reduced as much. Consequently, the pivotal motion of the seat can be performed light and the burden to the pivot shaft 73 can be reduced.

When the seat 30 is to be returned to the normal position upon running of the bicycle, if the seat 30 is pivoted in the clockwise direction against the spring force of the torsion spring 74, then when it comes to its substantially horizontal position, the latching portion 65b is brought into contact with an edge of the arresting hole 72. As the seat 30 is further pivoted in the same direction, the latching portion 65b is pivoted in the clockwise direction against the spring force of the torsion spring 67, and when the edge of the arresting hole 72 passes by the latching portion 65b, the latching portion 65b is resiliently engaged with the arresting hole 72 by the returning force of the torsion spring 67. Consequently, the seat 30 returns to and stops at the solid line position of FIG. 14.

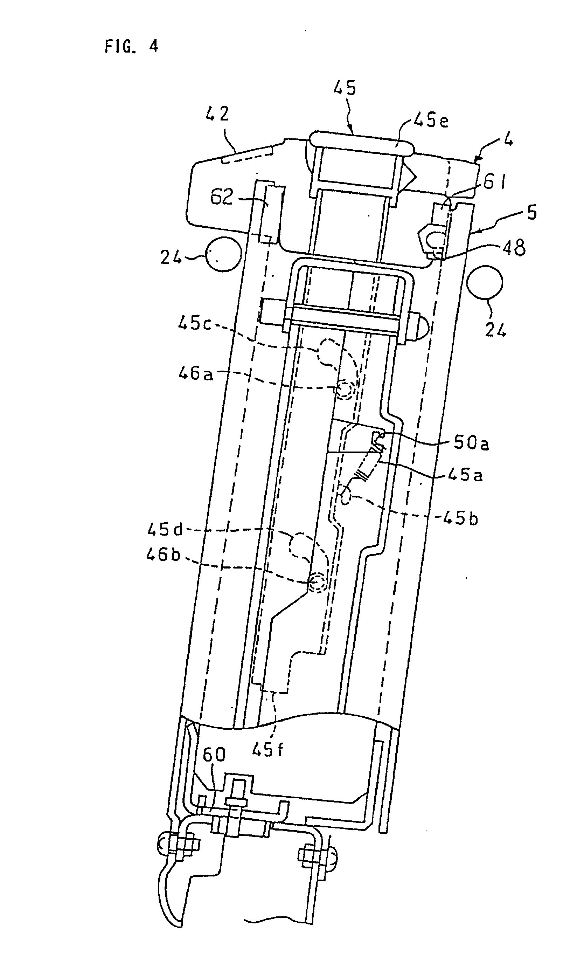

Now, a configuration of rear portions of the battery 4 and the accommodating case 5 is described in detail with reference to FIGS. 4, 2 and 3. FIG. 4 is a front elevational view of rear portions of the battery 4 and the accommodating case 5.

As shown in FIG. 4, the accommodating case 5 is installed between two upper arms 24 and is disposed such that, when the battery 4 is accommodated in the accommodating case 5, a projection of the accommodating case 5 having the charge remaining power meter 42 on an upper face thereof is positioned on the left side rear upper arm 24. An operation portion 45e extending rearwardly is provided at a top portion of the operation lever 45, and two guide holes 45c and 45d extending obliquely rightwardly downwards are provided at an upper portion and a lower portion at the center in the lengthwise direction. Projecting pins 46a and 46b (refer to FIG. 3) securely mounted on an inner wall of the side chamber 50 of the battery accommodating case are fitted in the guide holes. The operation lever 45 is biased upwardly by the spring 45a which extends between the hook-shaped projection 45b provided at a lower portion with respect to a central portion of the operation lever 45 and the cut and erected piece 50a of the side chamber 50.

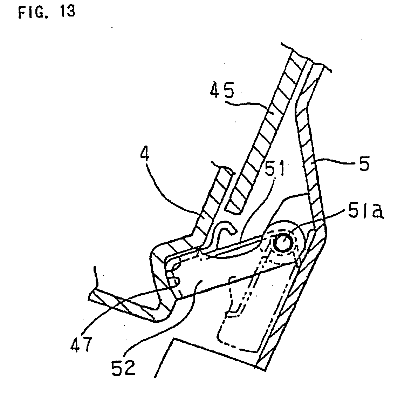

As can be seen apparently from an enlarged view of FIG. 13, the engaging hook 52 biased in the clockwise direction as viewed from the right side-by the torsion spring 51 provided around a shaft of a pivot shaft 51a engages with the recessed portion 47 of the battery 4. Since the battery 4 is secured at a lower portion thereof by the engaging hook 52, even if the vehicle body oscillates, the battery 4 does not move in the upward or downward direction or the leftward or rightward direction, but maintains a stable seated state. Further, even if the user tilts the seat 30 forwardly and grips the grip 41 to try to pull the battery 4 in the stable state upwardly, the battery 4 cannot be pulled out.

In the engagement means described above, the pivot shaft 51a serving as a fulcrum of the pivotal motion is provided rearwardly above the recessed portion 47 of the battery and the engaging hook 52 holds down the battery as a result of the pivotal motion, and consequently, the engagement means acts to suppress upward movement of the battery from obliquely upwardly in a diction in which the battery is to be pulled out. Accordingly, while the rearward projection amount of the engagement means is reduced, the engagement means can make its engaging force act in the pulling out direction of the battery effectively.

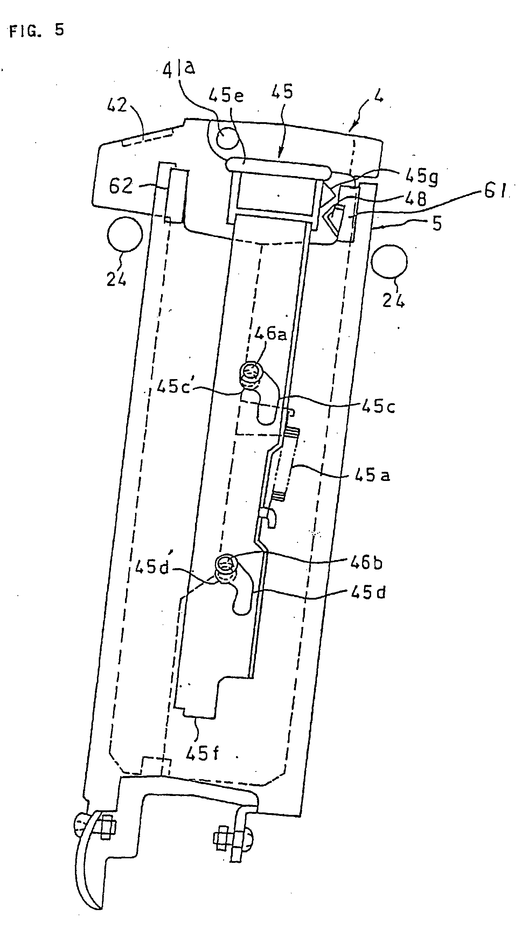

Subsequently, operation when the battery 4 is pulled out from the accommodating case 5 is described with reference to FIG. 5. In order to pull out the battery 4 from the accommodating case 5, the lever 65 is operated first to allow the seat 30 to be pivoted forwardly to a position at which the seat 30 does not make an obstacle to pulling out of the battery, and then the operation portion 45e of the operation lever 45 is pressed downwardly. Consequently, the operation lever 45 is moved obliquely rightwardly downwards as viewed from the rear against the spring force of the spring 45a under the guidance of the guide holes 45c and 45d. In the process of the movement, a lower end 45f of the operation lever 45 is brought into contact with the top end of the engaging hook 52 and presses the top end downwardly. As a result, the engaging hook 52 is pivoted in the counterclockwise direction (indicated by broken lines in FIG. 3), whereupon the engagement between the hook 52 and the "L" shaped recessed portion 47 of the battery 4 is cancelled.

Thus, if the user releases the operation portion 45e of the operation lever 45, then the operation lever 45' tends to be pivoted upwardly by the spring force of the spring 45a. Thereupon, however, the projecting pins 46a and 46b are engaged with lower sides 45c' and 45d' of upper portions of the guide holes 45c and 45d so that the operation lever 45 is stopped at the position. Accordingly, the user can release the operation lever and perform an operation of raising the battery using the hand which has been used to operate the operation lever, and consequently, pulling out of the battery can be performed with one hand and the operability is augmented.

Then, if the user grips the grip 41 of the battery 4 with its hand (right hand) and raises it, then the battery 4 can be pulled out from the accommodating case 5. At this time, a projection 48 formed at an upper portion of the battery 4 is engaged with a projection 45g formed in a projecting state on the right side of an upper portion of the operation lever 45 so that the operation lever 45 is lifted a little in an oblique leftwardly upward direction. Consequently, the engagement of the projecting pins 46a and 46b with the lower sides 45c' and 45d' is cancelled and the operation lever 45 returns to the original position, that is, the position of FIG. 4. Also the engaging hook 52 naturally returns to the solid line position of FIG. 3.

Therefore, there is no need of performing an operation for returning the operation lever again after the battery is pulled out, and the pulling out of the battery can be performed further simply. Further, even if the operation lever is pushed in a state wherein no battery is mounted, the operation lever is held at the pushed position, and also in this state, if a battery is inserted, then the projection 48 and the projection 45g are contacted with each other and the operation lever can return to the state shown. Accordingly, there is no problem even if the lever is pushed in error.

Then, if the user inserts a charged up battery 4 into the accommodating case 5 from above the accommodating case 5, then when the entire battery 4 almost enters the accommodating case 5, the lower end of the battery 4 is brought into contact with a side portion of the engaging hook 52 and pushes the engaging hook 52 in the counterclockwise direction as viewed from the right side. As the battery 4 is further accommodated to the interior of the accommodating case 5, the engaging hook 52 is resiliently engaged with the "L" shaped recessed portion 47 of the battery 4 and the battery 4 is secured to the accommodating case 5. Simultaneously, + and - output terminals (discharge contacts) provided on the bottom of the battery 4 are electrically and mechanically connected to a contact unit 60 secured by a screw to the battery bracket 49 (refer to FIG. 3) securely mounted on the seat post 23 by welding or the like. This connection is stabilized by the self weight of the battery 4 and the pressing by the engaging hook 52.

According to such a securing structure for a battery as described above, a securing structure for a battery can be provided which is compact and favorable in operability in that, while the battery engagement means stably keeps connection of the contacts at a position in the proximity of the contacts while making effective use of the dead space below a rear portion of the battery, the operation section for the engagement means is at a position above a rear portion of the battery which is a position at which the user can operate the operation section very easily.

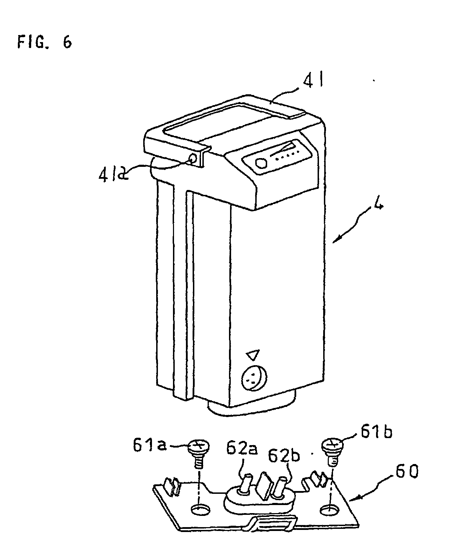

FIG. 6 is a schematic perspective view of the battery 4 and the contact unit 60. The contact unit 60 is secured to the battery bracket 49 by screws 61a and 61b. Two contact terminals 62a and 62b extending in the upward and downward directions are connected to the + and - output terminals formed on the bottom of the battery 4 to allow power to be supplied to the electrical auxiliary unit 1.

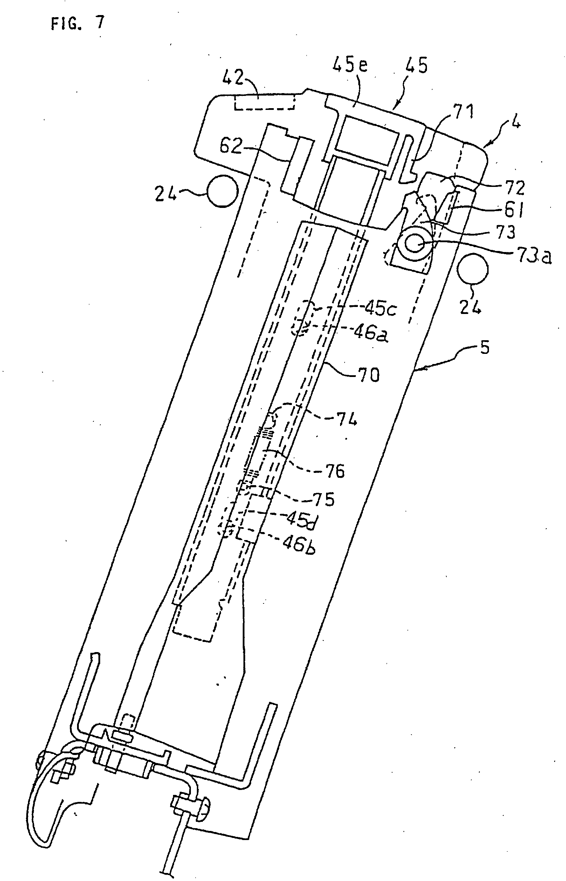

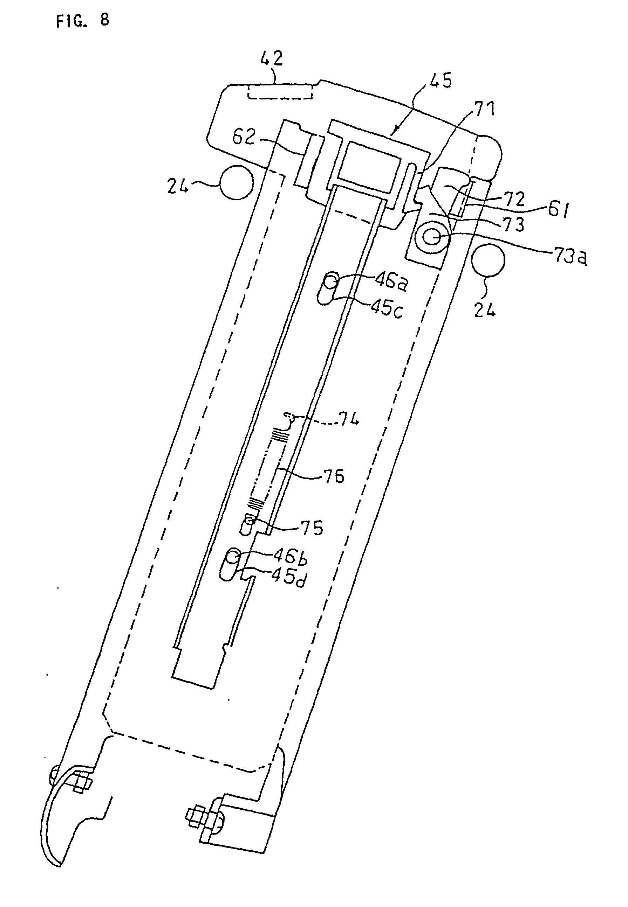

Subsequently, a second embodiment of the present invention is described with reference to FIGS. 7 and 8. The present embodiment is constructed such that, while, in the first embodiment described above, the operation lever 45 is displaced obliquely rightwardly downwards when the operation lever 45 is pushed downwardly, the operation lever 45 is moved straightforwardly downwardly so that the operation lever may not have a play in the leftward and rightward directions.

The width of a side chamber 70 of the battery accommodating case 5 in the lateral direction is a little greater than the width of the operation lever 45 in the same direction, and the side chamber 70 serves as a guide for the movement in the upward and downward directions of the operation lever 45. A first hook 71 is provided sidewardly of the operation portion 45e of the operation lever 45 such that it extends downwardly, and a second hook 73 which can be pivoted around a pivot shaft 73a is provided in an opposing relationship to the first hook 71 on the accommodating case 5. A spring 76 extends between a pin 75 provided at a position of the operation lever 45 a little lower than a central portion of the same and a cut and erected piece 74 provided in the side chamber 70. Further, in a state wherein the battery 4 is accommodated fully in the accommodating case 5, a projection 72 formed on a side wall of an upper portion of the battery 4 contacts with and presses down an oblique upper side portion of the second hook 73. Consequently, the second hook 73 is pivoted by a predetermined angle in the counterclockwise direction.

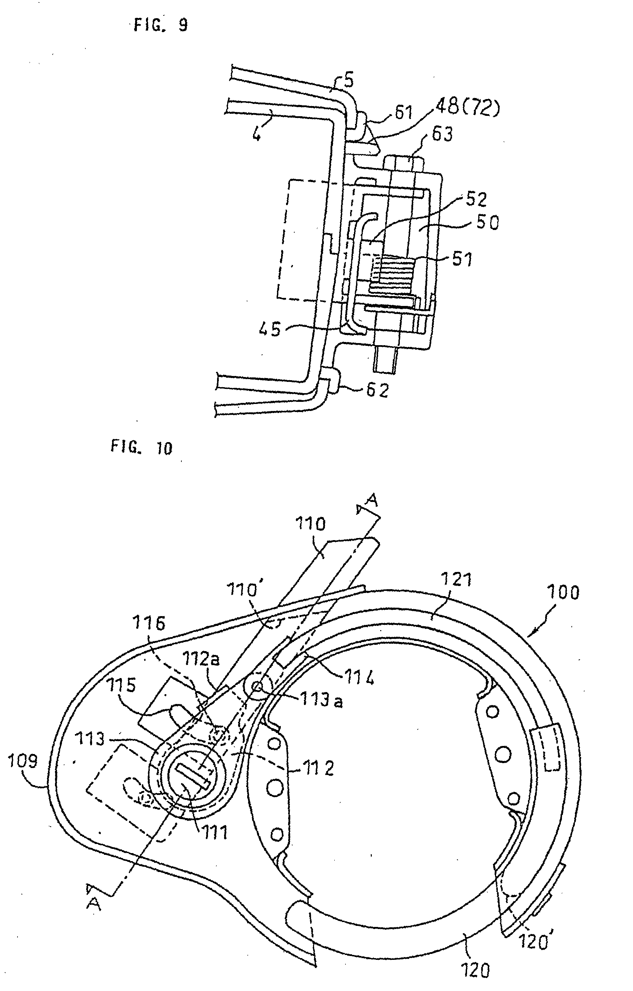

FIG. 9 is a top plan view of the rear portions of the battery 4 and the accommodating case 3 common in the first and second embodiments, and upper position control members 61 and 62 provided on the battery 4 are engaged with predetermined recessed portions formed on the accommodating case 5, that is, by convex and concave engagement so that the position of the upper portion of the battery 4 with respect to the accommodating case 5 is controlled. Further, the engaging hook 52 is biased toward the battery 4 by the torsion spring 51 fitted around a bolt 63 extending in the side chamber 50 and is engaged with the "L" shaped recessed portion 47 provided on the side wall of the lower portion of the battery 4. This engagement relationship is similar-to that in the first embodiment described hereinabove. The upper position control members 61 is formed integrally with the projection 48 or 72 provided on the same side.

In the present second embodiment, in order to remove the battery 4 from the accommodating case 5, the lever 65 is operated to tilt the seat 30 forwardly to retract the seat 30 from a removing or mounting path of the battery 4 and then the operation portion 45e of the operation lever 45 is pushed downwardly with a hand in a similar manner as in the first embodiment. Consequently, as shown in FIG. 8, the operation lever 45 is moved straightforwardly downwardly against the spring force of the spring 76 until an end of the first hook 71 is brought into contact with an end of the second hook 73. At this time, since the hook 73 is pressed from above by the projection 72 of the battery, the first hook 71 is deformed leftwardly and is further moved downwardly while contacting with the end portion of the second hook 73 until it is engaged with the second hook 73. Consequently, even if the user releases the operation lever 45, the operation lever 45 is kept as it is in the engaging position. Accordingly, similarly as in the first embodiment, the user can remove its hand from the operation lever. When the operation lever 45 is pushed to the engaging position, the end of the operation lever 45 presses the engaging hook 52 to cancel the engagement between the engaging hook 52 and the "L" shaped recessed portion 47 similarly as in the first embodiment.

Then, if the user grips the grip 41 with its hand and raises it in order to remove the battery 4 from the accommodating case 5, then also the projection 72 moves upwardly and releases the pressing of the second hook 73. As a result, since the operation lever is moved upwardly by the force of the spring 76 for the operation lever 45, the second hook 73 is pivoted together with the operation lever to a broken line position of FIG. 7, in which it waits insertion of the battery 4. Therefore, the hook 73 does not require specific biasing force in its pivoting direction, and the structure is simplified.

Thereafter, if a battery 4 charged up is inserted fully into the accommodating case, then the projection 72 presses the second hook 73 again so that the second hook 73 is pivoted by a predetermined angle in the counterclockwise direction and stops there. Then, the state of FIG. 7 is restored. At this time, the engagement relationship between the engaging hook 52 and the "L" shaped recessed portion 47 is established, and apparently the battery 4 is secured to the accommodating case 5.

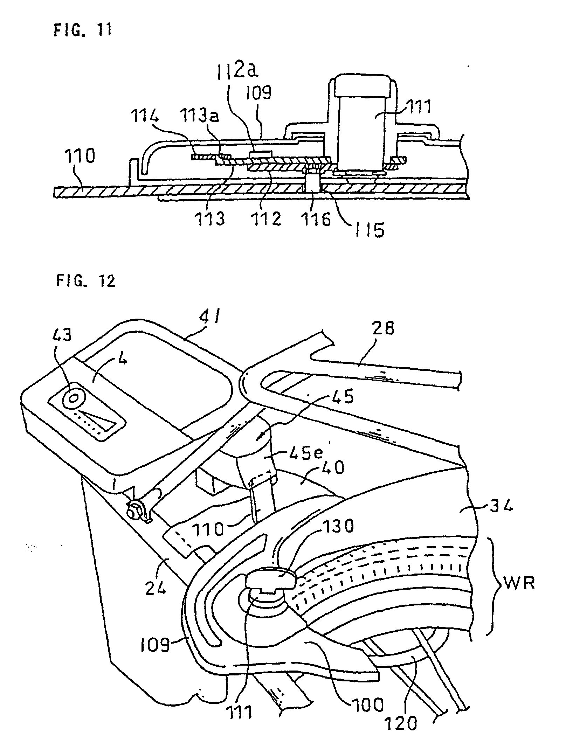

Subsequently, the wheel lock apparatus 100 is described with reference to FIGS. 10 and 11. FIG. 10 is a horizontal sectional view of the wheel lock apparatus 100, and FIG. 11 is a sectional view taken along line A-A of FIG. 10. The wheel lock apparatus 100 has a function of locking and unlocking the battery 4 and the rear wheel WR. A lock plate 110 engages, when it is in a projecting state (state of FIG. 10), with the operation portion 45e of the operation lever 45 to inhibit the battery 4 from being pulled out, but cancels, when it is in a retracted state, the engagement with the operation portion 45e to allow the battery 4 to be pulled out. Meanwhile, an arcuate lock bar 120 engages, when it is in a projecting state (state of FIG. 10), with the rear wheel WR to inhibit rotation of the rear wheel WR, but allows, when it is in a retracted state (a position indicated by reference character 120' in FIG. 10), rotation of the rear wheel WR. The lock plate 110 and the lock bar 120 operate in an interlocking relationship by a key operation.

A cylinder case 111 is secured to an upper lock case 109A, and a key cylinder 112 having a cylinder hole (key hole) 112a is provided for turning motion on the cylinder case 111. A cam plate 113 is securely mounted at a lower portion of the key cylinder 112. The cam plate 113 has a latching-portion 113a formed by bending part of a periphery thereof laterally, and the latching portion 113a is held in engagement with an arm plate 114. The arm plate 114 has an elongated hole 114a, and a pin 113b provided uprightly on the cam plate 113 is loosely fitted in the elongated hole 114a.

A terminal 115 is connected to the arm plate 114 through a link pin 115a, and an end of a wire cable 121 is connected to the terminal 115. An end of the lock bar 120 is connected to the other end of the wire cable 121.

A partially arcuate cam hole 116 is formed in a base portion of the lock plate 110, that is, in an end portion of the lock plate 110 opposite to the side for engagement with the operation portion 45e, and a pin 117 projecting from a lower face of the cam plate 113 is held in engagement with the cam hole 116. The arm plate 114 is biased in the counterclockwise direction in FIG. 10, that is, in a retraction direction (unlocking direction) of the lock bar 120 by a torsion spring 118 (FIG. 11) around an axis provided by the key cylinder 112.

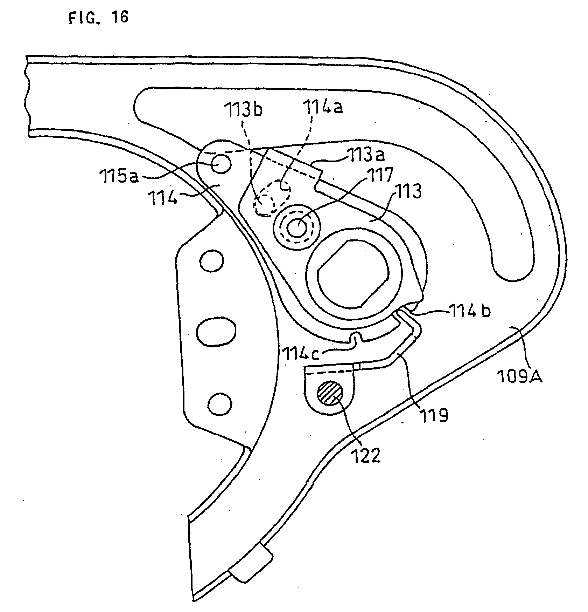

A stopper 119 for inhibiting pivotal motion of the arm plate 114 is supported for pivotal motion on a lower lock case 109B by means of a pin 122. A torsion spring 123 for biasing an end of the stopper 119 toward the arm plate 114 and the cam plate 113 side is supported on the pin 122. The stopper 119 engages with a groove (hereinafter described) of the arm plate 114 at a predetermined position to inhibit pivotal motion of the arm plate 114. This inhibition of pivotal motion is cancelled by an action of the cam plate 113. The action of the stopper 119 is hereinafter described with reference to FIG. 16 and so forth.

FIG. 12 is a perspective view of essential part of the vehicle body upon locking by the wheel lock apparatus. Parts similar to those described with reference to FIG. 12 are denoted by the same reference numerals in FIG. 3 and FIG. 10. Referring to FIGS. 3, 10, 11 and 12, if a key 130 is inserted into the cylinder hole 112a of the key cylinder 112 and turns the key cylinder 112 in its locking direction (clockwise direction in FIG. 10), then the cam plate 113 is pivoted, and the arm plate 114 is pivoted following the movement of the cam plate 113. Since the pin 117 of the cam plate 113 is held in engagement with the cam hole 116 of the lock plate 110, the lock plate 110 is operated linearly by the pivotal motion of the cam plate 113 until the lock plate 110 projects from a case 109 (an assembly of 109A and 109B). Meanwhile, the arm plate 114 pushes out the lock bar 120 through the wire cable 121.

If the lock plate 110 extends below the operation portion 45e of the operation lever 45, downward movement of the operation lever 45 is stopped. Accordingly, in a locking state, the operation lever 45 does not move down, and the engagement between the engaging hook 52 and the "L" shaped recessed portion 47 of the battery 4 is not cancelled. Consequently, the battery 4 cannot be pulled out upwardly.

Also the rear wheel WR is locked in an interlocking relationship with the locking of the battery 4. In particular, the lock bar 120 is projected (pivoted within the case 109) to surround the rear wheel WR from therearound to stop rotation of the rear wheel WR. Consequently, if the user stops the bicycle and locks the rear wheel WR, then also movement of the operation lever 45 is inhibited simultaneously, and the battery 4 cannot be removed.

If the legal key 130 (which should serve also as a power supply key) is inserted into the key cylinder 112 and turned in the unlocking direction (counterclockwise direction in FIG. 10) in order to effect unlocking, then the cam plate 113 is pivoted in the same direction, and also the arm plate 114 is pivoted following the movement of the cam plate 113. Then, the lock bar 120 is retracted into the case 109 until the end thereof is retracted to the position 120' indicated by broken lines to unlock the rear wheel WR. Meanwhile, by the pivotal motion of the cam plate 113, also the end of the lock plate 110 is retracted to a position 110' indicated by broken lines, whereupon the engagement with the operation portion 45e is cancelled. Upon the unlocking operation, since the cam plate 113 is biased by the torsion spring 118, it can be operated with weak force.

It is to be noted that, since, in a locking state, movement of the arm plate 114 is inhibited by the stopper 119, the arm plate 114 cannot be pivoted unless the inhibition is cancelled. Operation of the cam plate 113, arm plate 114 and stopper 119 upon unlocking is described. FIGS. 16 to 18 are rear views of essential part of the wheel lock apparatus 100. FIG. 16 is a view showing positions of the arm plate 114 and so forth in the locking state. In this state, the end of the stopper 119 engages with an arresting groove 114b formed in the arm plate 114 to inhibit pivotal motion of the arm plate 114. An end portion of the torsion spring 118 is fitted in another groove 114c formed in the arm plate 114.

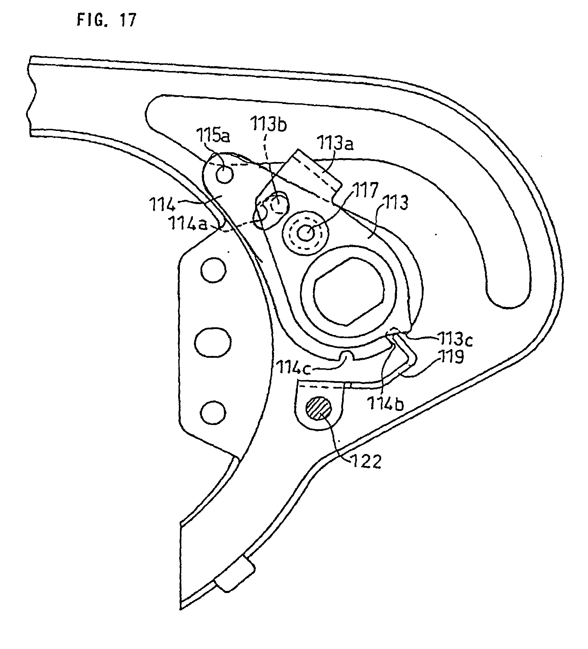

FIG. 17 is a view illustrating a state wherein the key cylinder is turned a little. If the cam plate 113 is rotated a little (for example, 10°) in the clockwise direction in FIG. 17, then the pin 113b provided on the cam plate 113 is displaced within the elongated hole 114a of the arm plate 114 until it comes to an end portion of the elongated hole 114a. Simultaneously, a cam face 113c of the cam plate 113 is engaged with an end of the stopper 119, and the stopper 119 is pivoted against the torsion spring 123 until the end thereof escapes from the arresting groove 114b.

If the cam plate 113 is further pivoted from the state of FIG. 17, then the end of the stopper 119 escapes completely from the arresting groove 114b, and the arm plate 114 is pivoted by a great amount in the same . direction as the cam plate 113 by the force of the torsion spring 118. In this manner, upon unlocking, after the arrest of the stopper 119 is cancelled with certainty, pivotal motion of the arm plate 114 is allowed after a delay from the initial movement of the cam plate 113, and consequently, the operation is certain.

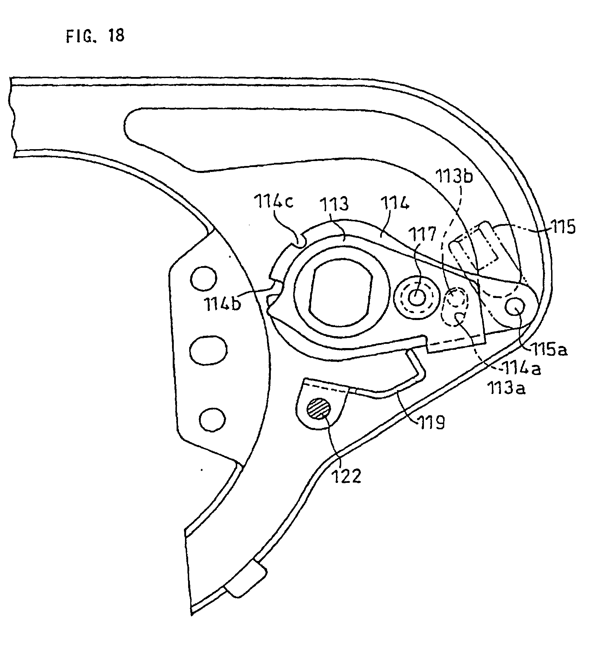

FIG. 18 is a view illustrating a state wherein the arm plate 114 is pivoted by a maximum amount by the torsion spring 118. If the torsion spring 118 acts sufficiently, then the key cylinder 112 is biased in the unlocking direction naturally only by the force of the torsion spring 118 after it is turned to a position at which the end of the stopper 119 escapes from the arresting groove 114b. Further, also when the friction is so large that the force of the torsion spring 118 is not sufficiently effective, since unlocking is performed compulsorily by the key 130, unlocking can be performed with certainty.

As described above, in a state wherein the wheel is unlocked, also the battery 4 is permitted to be removed simultaneously, and consequently, only if the operation portion 45e of the operation lever 45 is merely pushed down, then the engagement between the battery 4 and the accommodating case 5 is cancelled to allow the battery 4 to be pulled out from the accommodating case 5. Consequently, removing and mounting operations of the battery 4 are very easy.

In the wheel lock apparatus 100 of the construction described above, since the operation of the key 130 may be a single simple operation although a single key is used as both of a key for locking the rear wheel and a key for locking the battery, the operation can be performed simply and readily. Further, since, upon locking, projection of the lock bar 120 and projection of the lock plate 110 are performed simultaneously, the number of parts can be reduced. Besides, since a large installation space is not required, the wheel lock apparatus 100 itself can be manufactured and laid out readily. Furthermore, both of locking and unlocking operations can be performed with certainty following turning motion of the key 130.

The present invention having the construction described above presents such following merits as described below because locking and unlocking of the battery 4 and the rear wheel WR are performed simultaneously parallelly. In particular, when the wheel is not locked, also the battery is not locked, and consequently, the battery 4 can be removed from the accommodating case 5 merely by pushing the operation lever 45 downwardly without a key. On the other hand, when user leaves the vehicle body, if the user performs locking of the wheel, then also the battery is locked simultaneously. Consequently, the battery cannot be removed readily from the vehicle body. Accordingly, removing and mounting of the battery are facilitated, and locking can be performed effectively in practical use.

Further, since the battery applies a pressure downwardly by its own weight and the engaging hook is provided at a position proximate to the contacts at a lower portion of the battery, contact jumping by vibrations of the vehicle body during running can be suppressed effectively. Further, from this, the connection between the battery 4 and the contact unit 60 can always be stabilized.

The operation portion (operation portion 45e) of the operation lever 45 which releases the engaging hook is positioned at the position of a hand when the user stands, and the user can operate the operation lever 45 in an ordinary standing posture without stooping and can perform removal and mounting of the battery in an easy posture.

Further, when the battery 4 is to be removed from the accommodating case 5, the user can cancel the engagement of the accommodating case 5 with the battery 4 only by pushing the operation lever 45 downwardly with one hand. At this time, even if the user releases the operation lever, the operation lever 45 does not move upwardly, and consequently, the user can grip the grip 41 of the battery 4 slowly with the same hand and raise and remove the battery 4 from the accommodating case 5. Consequently, even if the other hand is occupied with a luggage, an umbrella (when the weather is rainy) or the like, the operation lever can be operated readily with one hand.

In summary it is an object to provide a battery mounting and removing apparatus for a power-assisted bicycle wherein a battery can be removed from a vehicle body without using a key and besides the battery can be locked effectively in practical use. And to make it possible for a wheel lock apparatus and a battery lock apparatus to particularly perform unlocking with certainty.
To achieve this, a battery accommodating case 5 for accommodating a battery 4 is mounted at a rear portion of a seat post 23, and an operation lever 45 for releasing an engaging hook 52 which secures the battery 4 to the accommodating case 5 and a wheel lock apparatus 100 for controlling an operation of the operation lever 45 and locking a wheel are provided at a rear portion of the battery 4. When the wheel lock apparatus 100 is not in a locking state, the battery 4 can be removed from the accommodating case 5 without a key. A cam plate 113 is securely mounted on a key cylinder 112, and the cam plate 113 pivots an arm plate 114 through a pin 113b. The pivotal motion of the arm plate 114 is transmitted to a lock bar 120 for locking a wheel through a wire 121 so that the lock bar 120 is projected and retracted. The motion of the arm plate 114 is further transmitted to a lock plate 110 serving as battery locking means through a pin 117. Accordingly, the battery and the wheel are locked and unlocked in an interlocking relationship with each other by turning motion of the key cylinder 112.

## Claims

1. A battery mounting and removing apparatus for a power-assisted bicycle on which a battery (4) is carried,
**characterized in that** it comprises
battery mounting and removing means (45, 52) for securing and releasing said battery (4) to and from a vehicle body (2), and
wheel locking means (100) for locking a wheel (WR), and that said battery mounting and removing means (45, 52) is disabled from being operated when said wheel (WR) is locked.

2. A battery mounting and removing apparatus for a power-assisted bicycle according to claim 1,
**characterized in that**
said battery mounting and removing means (45, 52) is formed from an engaging hook (52) for engaging with said battery (4), and an operation lever (45) for releasing said engaging hook (52) from said battery (4).

3. A battery mounting and removing apparatus for a power-assisted bicycle according to claim 2,
**characterized in that**
said wheel locking means (100) is capable of locking said wheel (WR) using a key (130) and disables said operation lever (45) from being operated in a state wherein said wheel (WR) is locked.

4. A battery mounting and removing apparatus for a power-assisted bicycle according to claim 2,
**characterized in that**
said battery (4) is carried along a seat post (23) such that a longitudinal direction thereof is a vertical direction, and discharge contacts of said battery (4) are disposed at a lower portion of said battery (4) while also said engaging hook (52) is provided at a lower portion of said battery (4) in the proximity of said discharge contacts, and
said operation lever (45) includes an operation portion (45e) at an upper portion of said battery (4) and an operation performed for said operation lever (45) is transmitted to said engaging hook (52).

5. A battery mounting and removing apparatus for a power-assisted bicycle according to claim 2,
**characterized in that**
said operation lever (45) includes means (45c, 46a, 45d, 46b; 71, 73) for holding a released state of said engaging hook (52) when said operation lever (45) is operated in a direction in which the engagement between said engaging hook (52) and said battery (4) is cancelled and
means (45g, 48; 72) for cancelling the held state by a removing operation of said battery (4) from said vehicle body (2).

6. A wheel lock apparatus for a power-assisted bicycle, which is disposed near a battery (4) mounted on a vehicle,
**characterized in that**
said wheel lock apparatus (100) is capable of locking said battery (4) at a wheel lock position (120') and unlocking said battery (4) at a wheel unlock position (120').

7. A wheel lock apparatus for a power-assisted bicycle according to claim 6, **characterized in that**
said wheel lock apparatus (100) comprises:
a key cylinder (112);
a lock bar which projects from a housing (109) of said wheel lock apparatus (100) by turning of said key cylinder (112) to a lock position, to lock a wheel (WR); and
a lock plate (110) which projects from said housing (109) in the direction of said battery (4) by turning of said key cylinder (112) to the lock position, to prohibit the unlocking of said battery (4).

8. A wheel lock apparatus for a power-assisted bicycle according to claim 7, **characterized in that**
said wheel lock apparatus (100) comprises:
plate means (113, 114, 115) turnable integrally with said key cylinder (112); and
a lock plate (110) connected to said plate means (113, 114, 115);
wherein said lock plate (110) is moved in/from said lock plate when said key cylinder (112) is turned to a lock/unlock position.

9. A wheel-lock apparatus for a power-assisted bicycle according to claim 8, **characterized in that**
said plate means (113, 114, 115) comprises:
a cam plate (113) turnable integrally with said key cylinder (112);
a first link plate (114) turnable in interlocking with the rotation of said cam plate (113); and
a second link plate (115), with one end thereof linked with said first link plate (114) and the other end thereof connected to a wire cable (121) for driving said lock bar (120).

10. A wheel lock apparatus for a power-assisted bicycle according to claim 9, **characterized in that** said cam plate (113) is provided with means connected to said lock plate (110).

11. A wheel lock apparatus for a power-assisted bicycle according to claim 7, **characterized in that**
said wheel lock apparatus (100) comprises:
means (113, 114, 115, 121) for connecting said key cylinder (112) to said lock bar (120), said means (113, 114, 115, 121) being configured to transmit the rotation of said key cylinder (112) in one direction by the key operation to said lock bar (120), thereby retracting said lock bar (120).

12. A wheel lock apparatus for a power-assisted bicycle according to claim 11, **characterized in that**
said wheel lock apparatus (100) comprises:
spring means (118) for biasing said lock bar (120) in the direction of retracting said lock bar (120).

13. A wheel lock apparatus for a power-assisted bicycle according to claim 11, **characterized in that** said connection means (113, 114, 115, 121) transmits turning motion in the other direction of said key cylinder (112) to project said lock bar (120).

14. A wheel lock apparatus for a power-assisted bicycle according to any one of claims 11 to 13, **characterized in that** it comprises
a lock plate (110) for inhibiting mounting and removal of a battery (4), which serves as a driving source of said electric motor (M), onto and from said bicycle, and
interlocking means (116, 117) for causing said lock plate (110) to project in response to projection of said lock bar (120) to inhibit mounting and removal of said battery (4) and causing said lock plate (110) to be retracted in response to retraction of said lock bar (120) to cancel the inhibition of mounting and removal of said battery (4).

## Patentansprüche

1. Batterieeinbau- und -ausbauvorrichtung für ein motorunterstütztes Fahrrad, auf dem eine Batterie (4) mitgeführt wird,
**dadurch gekennzeichnet, daß** sie umfaßt:
ein Batterieeinbau- und -ausbaumittel (45, 52) zum Befestigen und Lösen der Batterie (4) an bzw. von einer Fahrzeugkarosserie (2), und
ein Radblockierungsmittel (100) zum Blockieren eines Rades (WR), wobei das Batterieeinbau- und -ausbaumittel (45, 52) außer Funktion gesetzt ist, wenn das Rad (WR) blockiert ist.

2. Batterieeinbau- und -ausbauvorrichtung für ein motorunterstütztes Fahrrad nach Anspruch 1,
**dadurch gekennzeichnet, daß**
das Batterieeinbau- und -ausbaumittel (45, 52) aus einem Eingriffhaken (52) für den Eingriff mit der Batterie (4) und einem Betätigungshebel (45) zum Lösen des Eingriffhakens (52) von der Batterie (4) gebildet ist.

3. Batterieeinbau- und -ausbauvorrichtung für ein motorunterstütztes Fahrrad nach Anspruch 2,
**dadurch gekennzeichnet, daß**
das Radblockierungsmittel (100) das Rad (WR) unter Verwendung eines Schlüssels (130) blockieren kann und den Betätigungshebel (45) in einem Zustand, in dem das Rad (WR) blockiert ist, außer Betrieb setzt.

4. Batterieeinbau- und -ausbauvorrichtung für ein motorunterstütztes Fahrrad nach Anspruch 2,
**dadurch gekennzeichnet, daß**
die Batterie (4) längs einer Sattelstütze (23) getragen wird, so daß eine Longitudinalrichtung derselben eine Vertikalrichtung ist, wobei die Entladungskontakte der Batterie (4) an einem unteren Abschnitt der Batterie (4) angeordnet sind, während ferner der Eingriffhaken (52) an einem unteren Abschnitt der Batterie (4) in der Nähe der Entladungskontakte vorgesehen ist, und wobei der Betätigungshebel (45) einen Betätigungsabschnitt (45e) an einem oberen Abschnitt der Batterie (4) enthält und eine mit dem Betätigungshebel (45) durchgeführte Betätigung auf den Eingriffhaken (52) übertragen wird.

5. Batterieeinbau- und -ausbauvorrichtung für ein motorunterstütztes Fahrrad nach Anspruch 2,
**dadurch gekennzeichnet, daß**
der Betätigungshebel (45) Mittel (45c, 46a, 45d, 46b; 71, 73) zum Halten eines gelösten Zustands des Eingriffhakens (52), wenn der Betätigungshebel (45) in einer Richtung betätigt wird, in der der Eingriff zwischen dem Eingriffhaken (52) und der Batterie (4) aufgehoben wird, und ein Mittel (45g, 48; 72) zum Aufheben des Haltezustands durch eine Entnahmeoperation der Batterie (4) aus der Fahrzeugkarosserie (2) enthält.

6. Radblockierungsvorrichtung für ein motorunterstütztes Fahrrad, die nahe einer an einem Fahrzeug montierten Batterie (4) angeordnet ist,
**dadurch gekennzeichnet, daß**
die Radblockierungsvorrichtung (100) fähig ist, die Batterie (4) bei einer Radblockierungsposition (120') zu verriegeln und die Batterie (4) bei einer Radentriegelungsposition (120') zu entriegeln.

7. Radblockierungsvorrichtung für ein motorunterstütztes Fahrrad nach Anspruch 6,
**dadurch gekennzeichnet, daß** die Radblockierungsvorrichtung (100) umfaßt:
einen Schließzylinder (112);
einen Verriegelungsstab, der durch Drehen des Schließzylinders (112) in eine Verriegelungsposition aus einem Gehäuse (109) der Radblockierungsvorrichtung (100) hervorsteht, um ein Rad (WR) zu blockieren; und
eine Verriegelungsplatte (110), die durch Drehen des Schließzylinders (112) in die Verriegelungsposition vom Gehäuse (109) in Richtung der Batterie (4) hervorsteht, um ein Entriegeln der Batterie (4) zu verhindern.

8. Radblockierungsvorrichtung für ein motorunterstütztes Fahrrad nach Anspruch 7,
**dadurch gekennzeichnet, daß** die Radblockierungsvorrichtung (100) umfaßt:
ein Plattenmittel (113, 114, 115), das integral mit dem Schließzylinder (112) drehbar ist; und
eine Verriegelungsplatte (110), die mit dem Plattenmittel (113, 114, 115) verbunden ist; wobei
die Verriegelungsplatte (110) in/aus der Verriegelungsplatte bewegt wird, wenn der Schließzylinder (112) in eine Verriegelungs/Entriegelungs-Position gedreht wird.

9. Radblockierungsvorrichtung für ein motorunterstütztes Fahrrad nach Anspruch 8,
**dadurch gekennzeichnet, daß** das Plattenmittel (113, 114, 115) umfaßt:
eine Nockenplatte (113), die integral mit dem Schließzylinder (112) drehbar ist;
eine erste Verbindungsplatte (114), die in Verriegelung mit der Rotation der Nockenplatte (113) drehbar ist; und
eine zweite Verbindungsplatte (115), von der ein Ende mit der ersten Verbindungsplatte (114) verbunden ist und das andere Ende mit einem Drahtseil (121) zum Antreiben des Verriegelungsstabes (120) verbunden ist.

10. Radblockierungsvorrichtung für ein motorunterstütztes Fahrrad nach Anspruch 9, **dadurch gekennzeichnet, daß** die Nockenplatte (113) mit einem Mittel versehen ist, das mit der Verriegelungsplatte (110) verbunden ist.

11. Radblockierungsvorrichtung für ein motorunterstütztes Fahrrad nach Anspruch 7,
**dadurch gekennzeichnet, daß** die Radblockierungsvorrichtung (100) umfaßt:
ein Mittel (113, 114, 115, 121) zum Verbinden des Schließzylinders (112) mit dem Verriegelungsstab (120), wobei das Mittel (113, 114, 115, 121) so konfiguriert ist, daß es die Rotation des Schließzylinders (112) in einer Richtung durch die Schlüsselbetätigung auf den Verriegelungsstab (120) überträgt, um somit den Verriegelungsstab (120) zurückzuziehen.

12. Radblockierungsvorrichtung für ein motorunterstütztes Fahrrad nach Anspruch 11,
**dadurch gekennzeichnet, daß** die Radblockierungsvorrichtung (100) umfaßt:
ein Federmittel (118) zum Vorbelasten des Verriegelungsstabes (120) in Richtung des Zurückziehens des Verriegelungsstabes (120).

13. Radblockierungsvorrichtung für ein motorunterstütztes Fahrrad nach Anspruch 11, **dadurch gekennzeichnet, daß** das Verbindungsmittel (113, 114, 115, 121) die Drehbewegung des Schließzylinders (112) in der anderen Richtung überträgt, um den Verriegelungsstab (120) auszufahren.

14. Radverriegelungsvorrichtung für ein motorunterstütztes Fahrrad nach irgendeinem der Ansprüche 11 bis 13, **dadurch gekennzeichnet, daß** sie umfaßt:
eine Verriegelungsplatte (110) zum Verhindern des Einbauens und Ausbauens einer Batterie (4), die als Antriebsquelle eines Elektromotors (M) dient, in bzw. aus dem Fahrrad, und
ein Verriegelungsmittel (116, 117), um die Verriegelungsplatte (110) zu veranlassen, in Reaktion auf ein Ausfahren des Verriegelungsstabes (120) hervorzustehen, um das Einbauen und Ausbauen der Batterie (4) zu unterbinden und die Verriegelungsplatte (110) zu veranlassen, in Reaktion auf das Zurückziehen des Verriegelungsstabes (120) zurückgezogen zu werden, um die Unterbindung des Einbauens und Ausbauens der Batterie (4) aufzuheben.

## Revendications

1. Dispositif pour le montage et le démontage d'une batterie de bicyclette à commande assistée sur laquelle une batterie (4) est portée, **caractérisé en ce qu'**il comprend
des moyens de montage et de démontage de batterie (45, 52) pour fixer ladite batterie (4) à un cadre de véhicule (2) et l'en dégager, et
des moyens de verrouillage de roue (100) pour verrouiller une roue (WR), et **en ce que** lesdits moyens de montage et de démontage de batterie (45, 52) sont dans l'impossibilité d'être manoeuvrés lorsque ladite roue (WR) est verrouillée.

2. Dispositif pour le montage et le démontage d'une batterie de bicyclette à commande assistée selon la revendication 1, **caractérisé en ce que**
lesdits moyens de montage et de démontage de batterie (45, 52) sont formés d'un crochet de mise en prise (52) pour mettre en prise ladite batterie (4), et d'un levier de manoeuvre (45) pour dégager ledit crochet de mise en prise (52) de ladite batterie (4).

3. Dispositif pour le montage et le démontage d'une batterie de bicyclette à commande assistée selon la revendication 2, **caractérisé en ce que**
lesdits moyens de verrouillage de roue (100) sont capables de verrouiller ladite roue (WR) au moyen d'une clé (130) et empêchent ledit levier de manoeuvre (45) d'être manoeuvré dans un état dans lequel ladite roue (WR) est verrouillée.

4. Dispositif pour le montage et le démontage d'une batterie de bicyclette à commande assistée selon la revendication 2, **caractérisé en ce que**
ladite batterie (4) est supportée le long d'un tube de selle (23) de telle sorte qu'une direction longitudinale de celui-ci est une direction verticale, et des contacts de décharge de ladite batterie (4) sont placés en une partie inférieure de ladite batterie (4) alors que ledit crochet de mise en prise (52) est également placé en une partie inférieure de ladite batterie (4) à proximité desdits contacts de décharge, et
ledit levier de manoeuvre (45) comprend une partie de manoeuvre (45e) en une partie supérieure de ladite batterie (4) et une manoeuvre effectuée par ledit levier de manoeuvre (45) est transmise audit crochet de mise en prise (52).

5. Dispositif pour le montage et le démontage d'une batterie de bicyclette à commande assistée selon la revendication 2, **caractérisé en ce que**
ledit levier de manoeuvre (45) comprend des moyens (45c, 46a, 45d, 46b ; 71, 73) pour maintenir un état libéré dudit crochet de mise en prise (52) lorsque ledit levier de manoeuvre (45) est manoeuvré dans une direction dans laquelle la mise en prise entre ledit crochet de mise en prise (52) et ladite batterie (4) est annulée et
des moyens (45g, 48 ; 72) pour annuler l'état maintenu par une opération de démontage de ladite batterie (4) dudit cadre de véhicule (2).

6. Appareil de verrouillage de roue d'une bicyclette à commande assistée, qui est placé près d'une batterie (4) montée sur un véhicule, **caractérisé en ce que**
ledit dispositif de verrouillage de roue (100) est capable de verrouiller ladite batterie (4) en une position de verrouillage de roue (120') et de déverrouiller ladite batterie (4) en une position de déverrouillage de roue (120').

7. Appareil de verrouillage de roue d'une bicyclette à commande assistée selon la revendication 6, **caractérisé en ce que**
ledit dispositif de verrouillage de roue (100) comprend :
un cylindre à clé (112) ;
une tige de verrouillage qui dépasse d'un boîtier (109) dudit appareil de verrouillage de roue (100) par la rotation dudit cylindre à clé (112) en une position de verrouillage, afin de verrouiller une roue (WR) ; et
une plaque de verrouillage (110) qui dépasse dudit boîtier (109) dans la direction de ladite batterie (4) par la rotation dudit cylindre à clé (112) dans la position de verrouillage, afin d'empêcher le déverrouillage de ladite batterie (4).

8. Appareil de verrouillage de roue d'une bicyclette à commande assistée selon la revendication 7, **caractérisé en ce que**
ledit dispositif de verrouillage de roue (100) comprend :
des moyens formant plaque (113, 114, 115) pouvant tourner d'un seul tenant avec ledit cylindre à clé (112) ; et
une plaque de verrouillage (110) reliée auxdits moyens formant plaque (113, 114, 115) ;
dans lequel ladite plaque de verrouillage (110) est avancée dans/écartée de ladite plaque de verrouillage lorsque ledit cylindre à clé (112) est tourné dans une position de verrouillage/déverrouillage.

9. Appareil de verrouillage de roue d'une bicyclette à commande assistée selon la revendication 8, **caractérisé en ce que**
lesdits moyens formant plaque (113, 114, 115) comprennent :
une plaque formant came (113) pouvant tourner d'un seul tenant avec ledit cylindre à clé (112) ;
une première plaque intermédiaire (114) pouvant tourner en verrouillage mutuel avec la rotation de ladite plaque formant came (113) ; et
une deuxième plaque intermédiaire (115), avec une de ses extrémités reliée à ladite première plaque intermédiaire (114) et son autre extrémité reliée à un câble métallique (121) pour entraîner ladite tige de verrouillage (120).

10. Appareil de verrouillage de roue d'une bicyclette à commande assistée selon la revendication 9, **caractérisé en ce que** ladite plaque formant came (113) est munie de moyens reliés à ladite plaque de verrouillage (110).

11. Appareil de verrouillage de roue d'une bicyclette à commande assistée selon la revendication 7, **caractérisé en ce que** ledit dispositif de verrouillage de roue (100) comprend :
des moyens (113, 114, 115, 121) pour relier ledit cylindre à clé (112) à ladite tige de verrouillage (120), lesdits moyens (113, 114, 115, 121) étant configurés pour transmettre la rotation dudit cylindre à clé (112) dans une direction par l'action de la clé à ladite tige de verrouillage (120), en faisant ainsi se rétracter ladite tige de verrouillage (120).

12. Appareil de verrouillage de roue d'une bicyclette à commande assistée selon la revendication 11, **caractérisé en ce que** ledit dispositif de verrouillage de roue (100) comprend :
des moyens à ressort (118) pour solliciter ladite tige de verrouillage (120) dans la direction de retrait de ladite tige de verrouillage (120).

13. Appareil de verrouillage de roue d'une bicyclette à commande assistée selon la revendication 11, **caractérisé en ce que** lesdits moyens de connexion (113, 114, 115, 121) transmettent un mouvement de rotation dans l'autre direction dudit cylindre à clé (112) pour faire avancer ladite tige de verrouillage (120).

14. Appareil de verrouillage de roue d'une bicyclette à commande assistée selon l'une quelconque des revendications 11 à 13, **caractérisé en ce qu'**il comprend :
une plaque de verrouillage (110) pour empêcher le montage et le démontage d'une batterie (4), qui sert de source d'entraînement dudit moteur électrique (M), sur et hors de ladite bicyclette, et
des moyens de verrouillage mutuel (116, 117) pour faire sortir ladite plaque de verrouillage (110) en réponse à la sortie de ladite tige de verrouillage (120) afin d'empêcher le montage et le démontage de ladite batterie (4) et pour faire se rétracter ladite plaque de verrouillage (110) en réponse au retrait de ladite tige de verrouillage (120) afin d'annuler le blocage du montage et du démontage de ladite batterie (4).
